# EUROPEAN PATENT APPLICATION

(11) **EP 4 729 810 A1**
(43) Date of publication of application: **22.04.2026**
(21) Application number: 24825850.1
(22) Date of filing: 17.06.2024
(51) Int. Cl.: F16J 15/00, F16J 15/10, H01M 50/204

(54) **SEAL MATERIAL, OBSERVATION WINDOW, AND BATTERY UNIT**

(30) Priority: 19.06.2023 JP 2023100028
(71) Applicant: NOK Corporation, Minato-ku Tokyo 105-8585 (JP)
(72) Inventor: FUNAHASHI, Akira, Fujisawa-shi, Kanagawa 251-0042 (JP); OYAMA, Takayuki, Fujisawa-shi, Kanagawa 251-0042 (JP)
(74) Representative: TBK
(86) International application number: PCT/JP2024/021815
(87) International publication number: WO 2024/262449

(57) **Abstract**

A sealing material (100) includes a sealing material main body (10) that performs a sealing function between members, and a detection unit (20) that changes color when coming into contact with a detection target gas.

## Description

### TECHNICAL FIELD

The present invention relates to a sealing material, a viewing window, and a battery unit.

### BACKGROUND ART

A secondary battery used in an electric vehicle or the like is a battery that can be discharged by converting chemical energy associated with a chemical reaction into electric energy or charged by a reverse reaction. In particular, lithium secondary batteries have high energy density and are used in a wide range of fields.

Such a secondary battery has a configuration in which a cell unit is sealed in a housing defining a closed space.

Some secondary batteries generate hydrogen sulfide due to a sulfide-based electrolyte material or the like. Since the generation of hydrogen sulfide causes deterioration of the battery, a technique for electrically detecting hydrogen sulfide (Patent Documents 1 and 2) has been proposed.

### CITATION LIST

### PATENT DOCUMENTS

Patent Document 1: WO 2011/074097 A1
Patent Document 2: JP 2018-73801 A

### SUMMARY OF THE INVENTION

### PROBLEMS TO BE SOLVED BY THE INVENTION

However, in the techniques of Patent Documents 1 and 2, since it is necessary to electrically detect hydrogen sulfide, the configuration of the device becomes complicated.

In addition, a rare metal is used for the secondary battery, and it is preferable to reuse the battery main body or a part thereof. Thus, disassembly and repair work by a person such as a dealer is assumed, but from the viewpoint of safety, it is desirable to confirm the generation state of hydrogen sulfide before disassembling the housing.

The present invention has been made in view of the above problems, and provides a sealing material, a viewing window, and a battery unit capable of detecting generation of gas (hydrogen sulfide or the like) in a housing without using an electrical method and before disassembling the housing.

### MEANS FOR SOLVING THE PROBLEM

According to the present invention, there is provided a sealing material including:
a sealing material main body that performs a sealing function between members; and
a detection unit that changes color when coming into contact with a detection target gas.

Furthermore, according to the present invention, there is provided a viewing window attached to an opening penetrating an inside and an outside of a housing defining a closed space to make an inside of the closed space visible from the outside of the housing, the viewing window including:
a window member having visible light transmittance; and
a sealing material sealing between the window member and another member, wherein
the sealing material is the sealing material according to the present invention, and
at least a portion of the detection unit is disposed at a position exposed to the closed space when the viewing window is attached to the opening, and is disposed at a position visible from the outside of the housing separated from the closed space by the window member through the window member.

Furthermore, according to the present invention, there is provided a battery unit including:
a housing having an opening penetrating an inside and an outside and defining a closed space;
a cell unit disposed in the housing; and
a viewing window attached to the opening and making an inside of the closed space visible from an outside of the housing, wherein
the viewing window includes
a window member having visible light transmittance, and
a sealing material sealing between the window member and another member,
the sealing material is the sealing material according to the present invention,
the window member separates the closed space from the outside of the housing, and
at least a portion of the detection unit is exposed to the closed space and is visible from the outside of the housing via the window member.

### EFFECT OF THE INVENTION

According to the present invention, it is possible to detect generation of gas in a housing without using an electrical method and before disassembling the housing.

### BRIEF DESCRIPTION OF THE DRAWINGS

[Fig. 1]Figs. 1A to 1E are views illustrating a sealing material according to an embodiment, in which Fig. 1A is a perspective view, Fig. 1B is a view (plan view) of the sealing material as viewed in a central axis direction, Fig. 1C is a view (side view) of the sealing material as viewed in a radial direction, Fig. 1D is a cross-sectional view of the sealing material taken along a plane along the central axis, and Fig. 1E is a partially enlarged view of Fig. 1D.
[Fig. 2]Figs. 2A to 2D are views illustrating a battery unit according to the embodiment, in which Fig. 2A is a plan view, Fig. 2B is a perspective view, Fig. 2C is a side view, and Fig. 2D is a side cross-sectional view.
[Fig. 3]Figs. 3A and 3B are enlarged views illustrating a viewing window and a peripheral portion thereof in the battery unit according to the embodiment, in which Fig. 3A is a perspective cross-sectional view and Fig. 3B is a side cross-sectional view.
[Fig. 4]Figs. 4A to 4G are cross-sectional views illustrating modifications of the sealing material.
[Fig. 5]Figs. 5A to 5G are cross-sectional views illustrating modifications of the sealing material.
[Fig. 6]Fig. 6 is a side cross-sectional view illustrating a modification of the viewing window.

### DESCRIPTION OF EMBODIMENTS

Hereinafter, an embodiment and modifications of the present invention will be described with reference to the drawings. Note that, in all the drawings, similar components are denoted by the same reference numerals, and the description thereof will not be repeated.

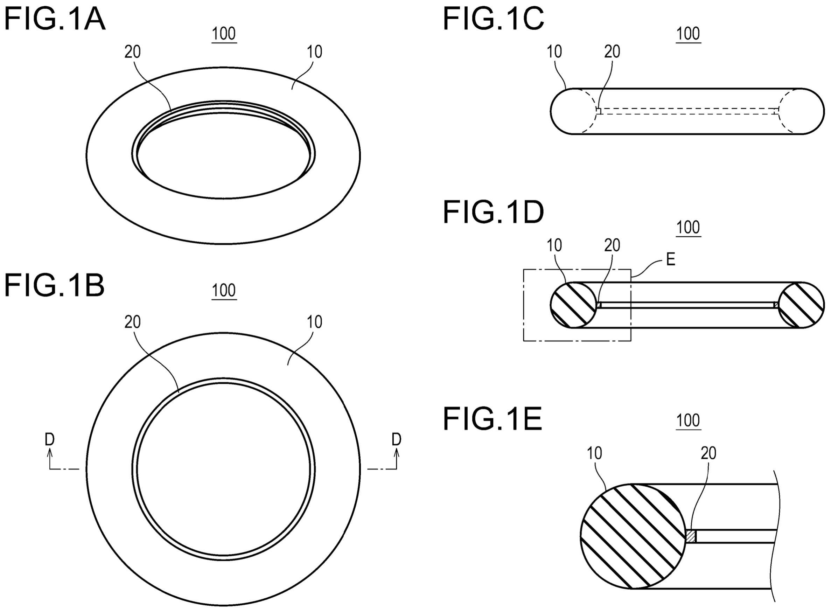

First, an embodiment will be described with reference to Figs. 1A to 3B.

In the present embodiment, a sealing material 100 is formed in an annular shape. Fig. 1B is a view of the sealing material 100 as viewed in a central axis direction thereof, and Fig. 1C is a view of the sealing material 100 as viewed in a radial direction thereof. The posture (orientation) of the sealing material 100 when the sealing material 100 is attached to an attachment target object is not particularly limited, but for convenience, Fig. 1B is a plan view, and Fig. 1C is a side view.

Fig. 1D is a cross-sectional view of the sealing material 100 taken along a plane along the central axis thereof, and is a cross-sectional view taken along line D-D illustrated in Fig. 1B.

Fig. 1E is a partially enlarged view of a portion E indicated by a one-dot chain line in Fig. 1D.

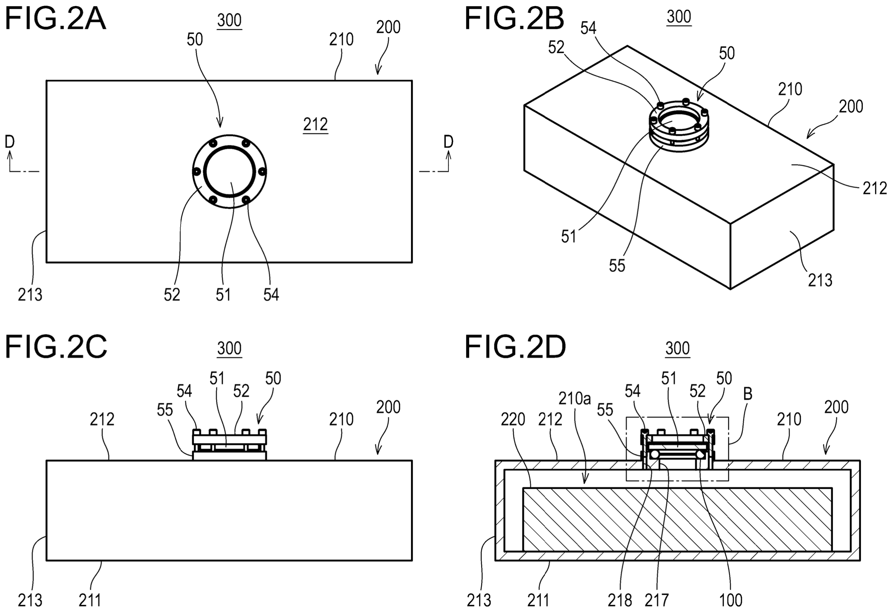

Fig. 2D is a side cross-sectional view of a battery unit 300 according to the embodiment, and is a cross-sectional view taken along line D-D illustrated in Fig. 2A. Note that Fig. 2D is a cross-sectional view taken along a plane passing through the central axes of the sealing material 100 and a viewing window 50.

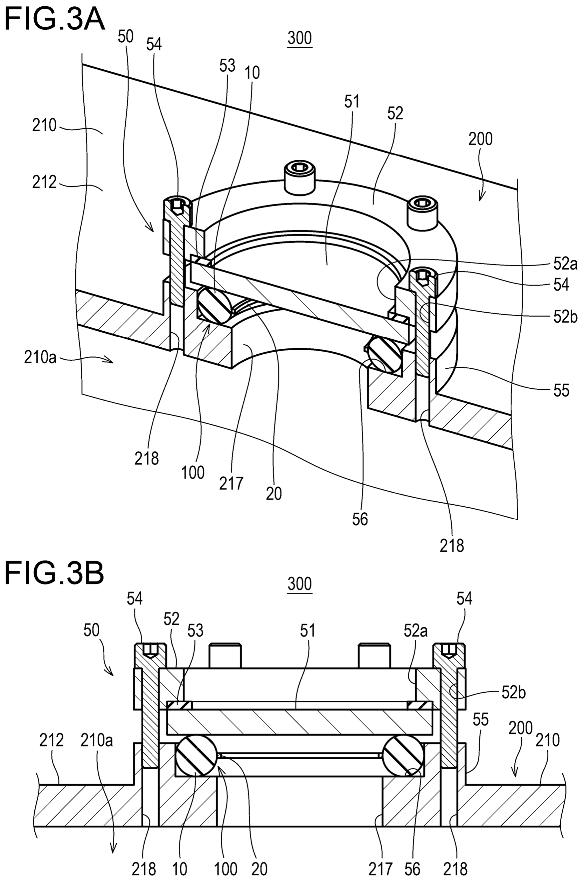

Fig. 3B is a partially enlarged view of a portion B indicated by a one-dot chain line in Fig. 2D, and Fig. 3A is a perspective cross-sectional view taken at the same position as Fig. 3B.

Hereinafter, the sealing material 100 according to the present embodiment will be described mainly with reference to Figs. 1A to 1E.

The sealing material 100 according to the present embodiment includes a sealing material main body 10 that performs a sealing function between members, and a detection unit 20 that changes color when coming into contact with a detection target gas.

According to the present embodiment, the sealing material 100 includes the sealing material main body 10 that performs a sealing function between members, and the detection unit 20 that changes color when coming into contact with a detection target gas. Thus, by disposing the detection unit 20 at a position exposed to the atmosphere in a closed space defined by a housing 210 (Figs. 2A to 3B) and at a position visible from the outside via the viewing window 50 (Figs. 2A to 3B), it is possible to detect generation of gas in the housing 210 without using an electrical method and before disassembling the housing 210. Therefore, a power source for gas detection is unnecessary.

This will be described in more detail below.

The type of the detection unit 20 is not limited as long as it changes in color when coming into contact with the detection target gas, but it is preferable that the detection unit 20 includes a metal material.

In the present invention, the type of the detection target gas is not particularly limited, but in the present embodiment, a case where the detection target gas is hydrogen sulfide will be described. In this case, the type of the metal material used for the detection unit 20 is not limited as long as the metal material changes in color by reaction with hydrogen sulfide, but in the case of the present embodiment, silver is used which is easily visually discriminated because the metal material is changed to black by the reaction with hydrogen sulfide.

In the case of the present embodiment, the detection unit 20 is integrated with the sealing material main body 10.

Thus, the sealing material 100 including the detection unit 20 and the sealing material main body 10 can be easily attached, and the position of the detection unit 20 can be uniquely determined by attaching the sealing material main body 10 between the members.

The method of integrating the detection unit 20 with the sealing material main body 10 is not particularly limited, but for example, in addition to the detection unit 20 and the sealing material main body 10 being integrally molded by two-color molding or insert molding, the detection unit 20 may be fixed to the sealing material main body 10 by adhesion or bonding, or the detection unit 20 may be formed by applying the detection unit 20 (elastic body containing a coloring agent that changes color when coming into contact with the detection target gas) to the sealing material main body 10 after molding of the sealing material main body 10 (elastic body).

In addition, a portion of the sealing material 100 including the sealing material main body 10 and the detection unit 20 may be formed of one material, and the entire sealing material main body 10 may be the detection unit 20. In this case, for example, the entire sealing material 100 can be used as the detection unit 20.

However, the present invention is not limited to this example, and the detection unit 20 and the sealing material main body 10 may be configured separately. In this case, the detection unit 20 may be fixed to the sealing material main body 10 by adhesion, bonding, or the like at a position according to preference of the user, or may be attached to an attachment object (for example, an inner surface of a window member 51 to be described later, an inner peripheral surface of an opening 217, and the like) separately from the sealing material main body 10. In this case, for example, the sealing material 100 preferably circulates in a state in which the detection unit 20 and the sealing material main body 10 are packed together.

In the case of the present embodiment, the detection unit 20 is integrally molded with the sealing material main body 10.

Thus, it is possible to implement the sealing material 100 in which the detection unit 20 and the sealing material main body 10 are well integrated.

As an example, a material constituting the sealing material main body 10 and a material constituting the detection unit 20 are integrated by two-color molding. In this case, the sealing material main body 10 is formed of, for example, an elastic body. On the other hand, the detection unit 20 is made of, for example, an elastic body containing a coloring agent that changes color when coming into contact with the detection target gas.

However, the present invention is not limited to this example, and the sealing material 100 may be formed by insert molding in which the detection unit 20 (the metal constituting the detection unit 20, or a resin or an elastic body containing a coloring agent and constituting the detection unit 20) is inserted into the material constituting the sealing material main body 10.

In the case of the present embodiment, the sealing material main body 10 is a seal ring formed in an annular shape, and the detection unit 20 is disposed at a position visible when the seal ring is viewed from one side in an axial direction of the seal ring.

Thus, by disposing the sealing material main body 10 between the members, it is possible to easily form a sealing region circling 360 degrees. Further, by disposing the sealing material 100 between the members in a direction in which the detection unit 20 is disposed at a position visible from the outside of the viewing window 50 to be described later, the detection unit 20 can be easily viewed from the outside of the housing 210.

That the sealing material main body 10 is a seal ring means that the sealing material main body 10 has a closed loop shape, and the sealing material main body 10 has an opening in a central portion thereof. The shape of the sealing material main body 10 in this case is not limited as long as it has a closed loop shape, and may be, for example, an elliptical annular shape, a rectangular annular shape, or the like in addition to an annular shape.

However, the present invention is not limited to this example, and the sealing material main body 10 may be other than the seal ring. For example, the sealing material main body 10 may be formed in a string shape. In this case, the sealing material main body 10 is deformed into, for example, a loop shape and disposed between the members.

In the case of the present embodiment, at least a part of the detection unit 20 is disposed on an inner peripheral side of the seal ring (sealing material main body 10).

Thus, even if an outer peripheral side portion of the sealing material main body 10 is covered with the member arranged around the sealing material 100, good visibility of the detection unit 20 can be secured, so that the restriction on the arrangement of the sealing material 100 and the restriction on the shape of the member arranged around the sealing material 100 are loosened.

The inner peripheral side of the sealing material main body 10 is a portion facing the central axis of the sealing material main body 10 on an outer surface of the sealing material main body 10. In a case where the sealing material main body 10 is an annular O-ring, the inner peripheral side of the sealing material main body 10 means an inner region of a virtual circle having a diameter of just an intermediate dimension between an outer diameter and an inner diameter of the sealing material main body 10 when the sealing material main body 10 is viewed in the axial direction.

In the case of the present embodiment, the entire detection unit 20 is disposed on the inner peripheral side of the sealing material main body 10.

As described above, in the case of the present embodiment, the detection unit 20 is integrated with the sealing material main body 10, and the detection unit 20 is disposed on at least a surface layer of the sealing material main body 10.

In the present embodiment, the sealing material main body 10 is an O-ring. That is, the sealing material main body 10 has an annular shape, and a cross-sectional shape of the sealing material main body 10 taken along the axial direction of the sealing material main body 10 is circular (or elliptical). Note that the central axis of the sealing material main body 10 coincides with the central axis of the sealing material 100.

In the case of the present embodiment, the detection unit 20 is formed in an annular shape. An outer diameter of the detection unit 20 is equal to the inner diameter of the sealing material main body 10, and the inner diameter of the detection unit 20 is smaller than the inner diameter of the sealing material main body 10. The central axis of the detection unit 20 coincides with the central axis of the sealing material main body 10.

For example, when the central axis direction of the sealing material main body 10 is referred to as a thickness direction, the dimension (thickness dimension) of the detection unit 20 in the thickness direction is smaller than the dimension (thickness dimension) of the sealing material main body 10 in the same direction. Then, the detection unit 20 is disposed at a portion where the inner diameter of the sealing material main body 10 is the smallest and in the vicinity thereof in the thickness direction of the sealing material main body 10.

Note that the total volume of the detection unit 20 is smaller than the total volume of the sealing material main body 10, and is, for example, equal to or less than half the total volume of the sealing material main body 10, preferably equal to or less than 1/10 of the total volume of the sealing material main body 10, and more preferably equal to or less than 1/20 of the total volume of the sealing material main body 10. With this configuration, the amount of the detection unit 20 that is more expensive than the sealing material main body 10 can be reduced because the detection unit includes the metal material.

In the case of the present embodiment, the sealing material main body 10 and the detection unit 20 are formed of an elastic body.

Thus, sealability (sealing property) by the sealing material main body 10 can be easily achieved.

The elastic body constituting the sealing material main body 10 is made of a material having high elasticity (rubber-like elastic body) such as rubber (synthetic rubber or natural rubber) or a thermoplastic elastomer (thermoplastic resin rubber elastic body), and has flexibility. Examples of the material of the sealing material main body 10 include rubber materials such as nitrile rubber (NBR), hydrogenated nitrile butadiene rubber (H-NBR), acrylic rubber (ACM), fluororubber (FKM), and ethylene propylene diene rubber (EPDM).

The elastic body constituting the detection unit 20 is also similar to the elastic body constituting the sealing material main body 10. However, as described above, it is preferable that the detection unit 20 includes a metal material that changes in color when coming into contact with the detection target gas.

In the present embodiment, the detection target gas is hydrogen sulfide, and in this case, the material of the sealing material main body 10 is preferably EPDM having good sealability of hydrogen sulfide and sealability of an aqueous material.

In this case, the detection unit 20 preferably includes a silver filler.

The rubber (EPDM) or the like containing the silver filler is, for example, initially yellowish white in color (before contact with hydrogen sulfide), and changes in color to black by reacting with hydrogen sulfide.

The detection unit 20 preferably includes a polymer material, a coloring agent that changes color when coming into contact with hydrogen sulfide, and a color reaction accelerator.

The polymer material mentioned herein is a material (a material having high elasticity in a crosslinked state, such as rubber or a thermoplastic elastomer) of an elastic body constituting detection unit 20.

In the present invention, the detection unit 20 is not necessarily an elastic body (made of a material rich in elasticity), and the polymer material referred to herein may be a hard material having poor elasticity in a crosslinked state.

In a case where the detection target gas is hydrogen sulfide, the coloring agent preferably includes at least one selected from the group consisting of silver, a silver compound, copper, a copper compound, nickel, a nickel compound, cobalt, a cobalt compound, lead, a lead compound, iron, and an iron compound.

The color reaction accelerator is preferably a polar oil.

The color reaction accelerator is preferably silicone oil and/or ester oil.

It is preferable that the coloring agent is contained in an amount equal to or more than 10 parts by weight and equal to or less than 500 parts by mass and the color reaction accelerator is contained in an amount equal to or more than 0.1 parts by weight and equal to or less than 30 parts by mass with respect to 100 parts by mass of the polymer material.

This makes it possible to detect a gas having a low concentration of hydrogen sulfide by change in color of the detection unit 20 without increasing the content of the coloring agent.

### <Color Reaction Accelerator>

The color reaction accelerator will be described in more detail.

The present inventors estimate that at least a part of hydrogen sulfide in contact with the detection unit 20 is dissolved in the color reaction accelerator included in the detection unit 20, the dissolved hydrogen sulfide (H₂S) is ionized, and then reacts with the coloring agent. In this case, since most of the hydrogen sulfide is quickly dissolved in the color reaction accelerator, the present inventors consider that the detection unit 20 is likely to be colored even if the content of the coloring agent is small, or is likely to change color earlier.

The color reaction accelerator is not particularly limited, but is preferably oil having polarity, that is, polar oil. This is because the coloring agent is easily dissolved in the polar oil.

As the color reaction accelerator, silicone oil or ester oil can be used. Among them, the color reaction accelerator is preferably silicone oil and/or ester oil.

The present inventors have found that the detection unit 20 using the silicone oil and/or the ester oil as the color reaction accelerator more easily changes color or more quickly changes color even if the amount of the coloring agent is small.

The content of the color reaction accelerator in the detection unit 20 is preferably equal to or more than 0.1 parts by weight and equal to or less than 30 parts by mass with respect to 100 parts by mass of the polymer material.

When the amount of the color reaction accelerator with respect to the polymer material is too large, it is difficult to knead the polymer material in the production process. In addition, when the amount of the color reaction accelerator with respect to the polymer material is too small, the coloring agent becomes difficult to change in color.

### <Coloring Agent>

The coloring agent contained in the detection unit 20 will be described in more detail.

The coloring agent only needs to be composed of an element or a compound that changes color when coming into contact with hydrogen sulfide.

Examples of the coloring agent include those composed of a chalcophile element, a siderophile element, or a compound thereof.

Examples of the chalcophile element include copper, zinc, gallium, germanium, arsenic, selenium, silver, cadmium, lanthanum, tin, antimony, tellurium, mercury, thallium, lead, bismuth, and polonium.

Examples of the siderophile element include manganese, iron, cobalt, nickel, molybdenum, ruthenium, rhodium, palladium, rhenium, osmium, iridium, platinum, and gold.

Among them, the coloring agent is preferably composed of at least one selected from the group consisting of silver, a silver compound, copper, a copper compound, nickel, a nickel compound, cobalt, a cobalt compound, lead, a lead compound, iron, and an iron compound, and more preferably composed of at least one selected from the group consisting of lead, a lead compound, iron, and an iron compound.

The present inventors have found that the detection unit 20 using such a coloring agent more easily changes color or more quickly changes color even when the amount of the coloring agent is small.

The coloring agent is preferably in powder form.

The content of the coloring material in the detection unit 20 is preferably equal to or more than 10 parts by weight and equal to or less than 500 parts by mass with respect to 100 parts by mass of the polymer material.

When the amount of the color reaction accelerator with respect to the polymer material is too large, it is difficult to knead the polymer material in the production process. In addition, when the amount of the color reaction accelerator with respect to the polymer material is too small, the coloring agent becomes difficult to change in color.

### <Polymer Material>

The polymer material contained in the detection unit 20 will be described in more detail.

The polymer material is not particularly limited, and examples thereof include conventionally known polymer materials such as diene-based rubbers and hydrogenated products thereof, olefin-based rubbers, halogen-containing rubbers, silicone rubbers, sulfur-containing rubbers, and fluororubbers.

Examples of the diene-based rubber and its hydrogenated product include natural rubber (NR), isoprene rubber (IR), epoxidized natural rubber, styrene butadiene rubber (SBR), butadiene rubber (BR) (high cis BR and low cis BR), acrylonitrile butadiene rubber (NBR), hydrogenated NBR, and hydrogenated SBR.

Examples of the olefin-based rubber include ethylene propylene rubber (EPM), ethylene propylene diene rubber (EPDM), maleic acid-modified ethylene propylene rubber (M-EPM), maleic anhydride-modified ethylene-α-olefin copolymer, ethylene-glycidyl methacrylate copolymer, maleic anhydride-modified ethylene-ethyl acrylate copolymer (modified EEA), butyl rubber (IIR), isobutylene and aromatic vinyl or diene-based monomer copolymer, acrylic rubber (ACM), and ionomer.

Examples of the halogen-containing rubber include halogenated butyl rubbers such as brominated butyl rubber (Br-IIR) and chlorinated butyl rubber (Cl-IIR), halogenated isomonoolefin-p-alkylstyrene copolymers (for example, brominated isobutylene-p-methylstyrene copolymer (BIMS)), halogenated isobutylene-isoprene copolymer rubbers, chloroprene rubber (CR), hydrin rubber (CHR), chlorosulfonated polyethylene (CSM), chlorinated polyethylene (CM), and maleic acid-modified chlorinated polyethylene (M-CM).

Examples of the silicone rubber include methyl vinyl silicone rubber, dimethyl silicone rubber, and methyl phenyl vinyl silicone rubber. Examples of the sulfur-containing rubber include polysulfide rubbers. Examples of the fluororubber include vinylidene fluoride-based rubber, fluorine-containing vinyl ether-based rubber, tetrafluoroethylene-propylene-based rubber, fluorine-containing silicone-based rubber, and fluorine-containing phosphazene-based rubber.

The polymer material is preferably at least one selected from the group consisting of ethylene propylene diene rubber (EPDM), silicone rubber, acrylic rubber, and fluororubber.

The detection unit 20 includes the polymer material, the coloring agent, and the color reaction accelerator as described above, but may include other components.

However, the content of the other components is preferably equal to or less than 30 mass%, more preferably equal to or less than 15 mass%, more preferably equal to or less than 5 mass%, and still more preferably equal to or less than 1 mass%.

Note that, in a case where the detection target gas is, for example, water vapor other than hydrogen sulfide, detection unit 20 contains, for example, cobalt chloride. In this case, the detection unit 20 is initially blue (before contact with water vapor), and changes its color to red by reacting with water vapor.

Next, the battery unit 300 according to the present embodiment will be described with reference to Figs. 2A to 3B.

The battery unit 300 according to the present embodiment includes the housing 210 having an opening 217 penetrating the inside and the outside and defining a closed space 210a, a cell unit 220 disposed in the housing 210, and the viewing window 50 attached to the opening 217 and making the inside of the closed space 210a visible from the outside of the housing 210.

The viewing window 50 includes a visible light transmissive window member 51 and a sealing material 100 that seals between the window member 51 and another member.

The sealing material 100 is the sealing material 100 according to the present embodiment, and the sealing material main body 10 of the sealing material 100 seals between the window member 51 and another member.

The window member 51 separates the closed space 210a from the outside of the housing 210.

At least a part of the detection unit 20 is exposed to the closed space 210a and is visible from the outside of the housing 210 through the window member 51.

Here, the entire closed space 210a may exist inside the housing 210, or a part of the closed space 210a may exist outside the housing 210 and communicate with the internal space of the housing 210 via the opening 217. In the case of the present embodiment, a part of the closed space 210a exists outside the housing 210 and communicates with the internal space of the housing 210 via the opening 217, and the sealing material 100 is disposed in the part of the closed space 210a (the part existing outside the housing 210).

Further, the fact that at least a part of the detection unit 20 is exposed to the closed space 210a means that at least a part of the detection unit 20 is exposed to the atmosphere of the closed space 210a.

Thus, it is possible to determine whether or not the detection target gas is generated in the closed space 210a by visually confirming a change in color of the detection unit 20 from the outside of the housing 210 via the window member 51 of the viewing window 50 of the battery unit 300.

In the battery unit 300, a portion excluding the sealing material 100 is, for example, a battery 200 of an electric vehicle, a hybrid vehicle, or the like.

The battery 200 includes the housing 210 and the cell unit 220. The cell unit 220 is formed by unitizing a plurality of battery cells. The battery cell is, for example, a lithium secondary battery.

The shape of the housing 210 is not particularly limited, but for example, the housing 210 is formed in a rectangular parallelepiped shape having a rectangular planar shape.

In this case, the housing 210 includes a bottom plate 211, a top plate 212 disposed above the bottom plate 211 to face the bottom plate 211, and a side peripheral wall 213 connecting a peripheral edge of the bottom plate 211 and a peripheral edge of the top plate 212 to each other. The side peripheral wall 213 has a rectangular shape in plan view, and includes a pair of side walls arranged to face each other in parallel, and another pair of side walls orthogonal to the pair of side walls and arranged to face each other in parallel.

The housing 210 has the opening 217 to which the viewing window 50 is attached.

The formation place of the opening 217 in the housing 210 is not particularly limited, but in the case of the present embodiment, for example, the opening 217 is formed in the top plate 212.

The opening 217 penetrates the top plate 212 to communicate the inside and the outside of the housing 210.

However, since the viewing window 50 is attached to the opening 217 (to the top plate 212) in such a manner as to close the opening 217, the opening 217 is sealed, and the inside of the housing 210 is a closed space 210a.

Next, the viewing window 50 according to the present embodiment will be described.

The viewing window 50 according to the present embodiment is the viewing window 50 attached to the opening 217 penetrating the inside and the outside of the housing 210 defining the closed space 210a, and making the inside of the closed space 210a visible from the outside of the housing 210.

The viewing window 50 includes a visible light transmissive window member 51 and a sealing material 100 that seals between the window member 51 and another member.

The sealing material 100 is the sealing material 100 according to the present embodiment, and the sealing material main body 10 of the sealing material 100 seals between the window member 51 and another member.

At least a part of the detection unit 20 is arranged at a position exposed to the closed space 210a when the viewing window 50 is attached to the opening 217, and is arranged at a position visible from the outside of the housing 210 separated from the closed space 210a by the window member 51 through the window member 51.

Thus, by attaching the viewing window 50 to the opening 217 of the housing 210, it is possible to visually confirm the detection unit 20 from the outside of the housing 210 and to determine whether or not the detection target gas is generated in the closed space 210a.

As illustrated in Figs. 3A and 3B, the viewing window 50 includes, in addition to the sealing material 100 and the window member 51, a holding frame 52 that presses a peripheral edge portion on an outer surface side of the window member 51, a plurality of fixing members 54 that fasten the holding frame 52 to the top plate 212 of the housing 210, and an annular (having an opening at the center) packing 53 (cushioning material) interposed between the peripheral edge portion of the outer surface of the window member 51 and the holding frame 52.

In the case of the present embodiment, the opening 217 has, for example, a circular planar shape.

An annular wall 55 protruding outward is formed on an outer surface of a portion around the opening 217 in the top plate 212. The planar shape of the annular wall 55 is also, for example, a circular shape (annular shape).

From the annular wall 55 to a portion of the top plate 212 immediately below the annular wall 55, a plurality of fixing holes 218 (female threads) for fastening the holding frame 52 to the annular wall 55 using the fixing member 54 is formed.

An inner peripheral surface of the annular wall 55 and a peripheral edge portion (however, a portion located inside the annular wall 55) of the opening 217 on the outer surface of the top plate 212 form a seal arrangement portion 56 that is an arrangement region of the sealing material 100. The seal arrangement portion 56 is an annular (ring-shaped) region in plan view.

The sealing material 100 is arranged in the seal arrangement portion 56.

An inner diameter of the annular wall 55 is set to be equal to an outer diameter of the sealing material 100.

A height dimension of the annular wall 55 (dimension of the annular wall 55 in a protruding direction of the annular wall 55) is set to a dimension smaller than a dimension (thickness dimension) in the axial direction of the sealing material 100.

For example, the inner diameter of the opening 217 is set to the same dimension as the inner diameter of the sealing material 100.

The window member 51 is formed in, for example, a disk shape having an outer diameter slightly larger than the outer diameter of the sealing material 100.

The holding frame 52 is an annular plate-like member having an opening 52a at a center portion. An inner diameter of the holding frame 52 is smaller than the outer diameter of the window member 51, and the outer diameter of the holding frame 52 is larger than the outer diameter of the window member 51.

The holding frame 52 presses the window member 51 against the sealing material 100 via the packing 53.

A plurality of insertion holes 52b for fastening the holding frame 52 to the annular wall 55 is formed in the holding frame 52, and the holding frame 52 is fastened to the annular wall 55 by screwing the plurality of fixing members 54 into the annular wall 55 through the insertion holes 52b. Thus, a lower surface of the window member 51 is circumferentially pressed against the sealing material 100, and the opening 217 is hermetically sealed by the window member 51 and the seal arrangement portion 56.

In this way, the sealing material 100 is held in a compressed state between the peripheral edge portion of the lower surface of the window member 51 and the surface facing upward in the seal arrangement portion 56 (portion located inside the annular wall 55), and has a sealing function between the window member 51 and the top plate 212. That is, in the case of the present embodiment, the "inter-member sealing function" performed by the sealing material 100 is a sealing function between the window member 51 and the top plate 212.

Note that the holding frame 52, the fixing member 54, and the housing 210 (including the top plate 212 and the annular wall 55) are made of metal, for example.

The window member 51 is made of, for example, glass, but may be made of resin such as acrylic resin.

Since the packing 53 is interposed between the window member 51 and the holding frame 52, the window member 51 can be protected from the holding frame 52.

Since the packing 53 and the holding frame 52 are annular, there is no hindrance to visual recognition of the detection unit 20 through the window member 51 (visual recognition from the outside of the viewing window 50). That is, since the central portion of the window member 51 is exposed to the outside through the opening 52a of the holding frame 52 and the opening of the packing 53, the detection unit 20 can be visually recognized through the window member 51.

In addition, by fastening the holding frame 52 to (the annular wall 55 of) the top plate 212 by the fixing member 54, surface pressure (contact pressure) between the sealing material 100 and the window member 51 and surface pressure (contact pressure) between the sealing material 100 and the seal arrangement portion 56 can be sufficiently secured, and good sealability can be achieved.

In a case where the detection target gas (for example, hydrogen sulfide) is generated in the closed space 210a, the color of the detection unit 20 changes (for example, changes to black), so that the user can visually confirm the color of the detection unit 20 to recognize that the detection target gas is generated.

On the other hand, in a case where the detection target gas is not generated in the closed space 210a, the color of the detection unit 20 does not change and remains at the original color, so that the user can visually confirm the color of the detection unit 20 to recognize that the detection target gas is not generated.

Thus, since the presence or absence of the detection target gas can be confirmed while the sealed state of the housing 210 is maintained, it is possible to suppress leakage of the detection target gas from the housing 210.

Note that it is also possible to constantly check a change in color of the detection unit 20 from the outside of the housing 210 using a camera or the like.

### <Modification of Sealing Material 100>

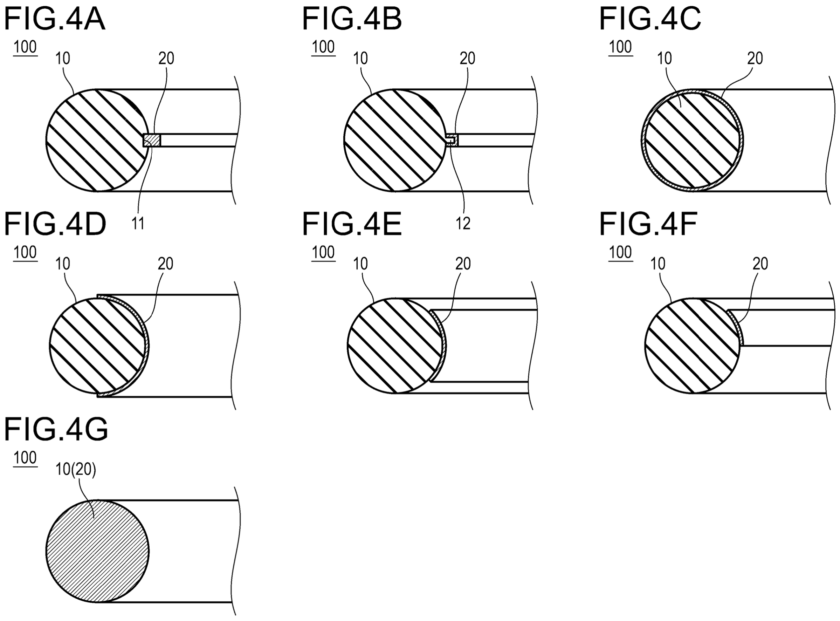

Next, a modification of the sealing material 100 will be described with reference to Figs. 4A to 5G.

Each of Figs. 4A to 5G is an enlarged cross-sectional view illustrating a portion corresponding to Fig. 1E.

The sealing material 100 illustrated in each of Figs. 4A to 5G has an annular shape (for example, an annular shape) as in the above embodiment.

The sealing material main body 10 illustrated in Figs. 4A to 4G is an O-ring as in the above embodiment.

In the example of Fig. 4A, a recess 11 for embedding and fixing a part of the outer peripheral side of the detection unit 20 is formed on the inner peripheral side of the sealing material main body 10. Thus, it is possible to improve the integrity between the detection unit 20 and the sealing material main body 10.

In the example of Fig. 4B, a protrusion 12 protruding inward in the radial direction is formed on the inner peripheral side of the sealing material main body 10, and the detection unit 20 is disposed on the surface of the protrusion 12. In this manner, the amount of the material of the detection unit 20 can be further reduced.

In the example of Fig. 4C, the detection unit 20 is applied and formed on the entire surface of the sealing material main body 10. By applying and forming the detection unit 20, the amount of the material of the detection unit 20 can be reduced.

In the example of Fig. 4D, the detection unit 20 is applied and formed in the entire region of the portion on the inner peripheral side of the sealing material main body 10, while the detection unit 20 is not formed in a portion on the outer peripheral side of the sealing material main body 10. Thus, the amount of the material of the detection unit 20 can be further reduced as compared with the example of Fig. 4C.

In the example of Fig. 4E, a range in which the detection unit 20 is applied and formed in a thickness direction of the sealing material 100 is narrower than that in the example of Fig. 4D. Thus, the amount of the material of the detection unit 20 can be further reduced as compared with the example of Fig. 4D. Note that, also in the present modification, the detection unit 20 is disposed at a position visible through the window member 51.

In the example of Fig. 4F, the range in which the detection unit 20 is applied and formed in the thickness direction of the sealing material 100 is narrower than that in the example of Fig. 4E. Thus, the amount of the material of the detection unit 20 can be further reduced as compared with the example of Fig. 4E. In this case, the detection unit 20 is disposed at a position visible through the window member 51.

In the example of Fig. 4G, the entire sealing material main body 10 is the detection unit 20.

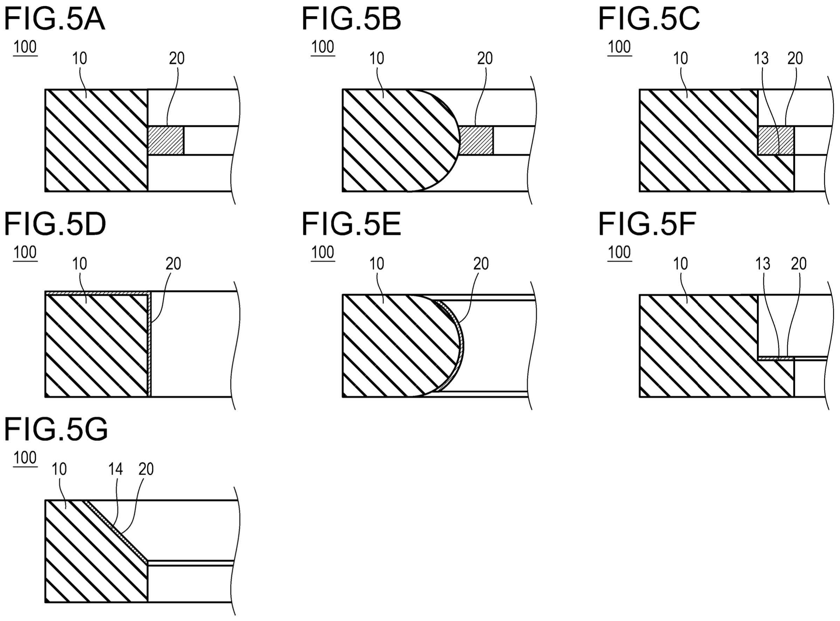

The sealing material main body 10 illustrated in Figs. 5A to 5G is formed in a shape other than an O-ring, unlike the above embodiment.

In the example of Fig. 5A, the cross-sectional shape of the sealing material main body 10 is a rectangular shape (for example, a square shape).

In the example of Fig. 5B, the cross-sectional shape of the sealing material main body 10 is a D-shape protruding in an arc shape toward the radial inside. That is, the sealing material main body 10 in Fig. 5B is a D ring.

In the example of Fig. 5C, the cross-sectional shape of the sealing material main body 10 is a shape including a rectangular portion and a rectangular holding table 13 protruding radially inward from a part of an inner peripheral surface of the rectangular portion. On the holding table 13, the detection unit 20 is disposed at a position visible through the window member 51.

In the example of Fig. 5D, the cross-sectional shape of the sealing material main body 10 is a rectangular shape (for example, a square shape), and the detection unit 20 is applied and formed over the inner peripheral surface of the sealing material main body 10 and the upper surface of the sealing material main body 10.

In the example of Fig. 5E, as in Fig. 5B, the sealing material main body 10 is a D-ring, and the detection unit 20 is applied and formed on the inner peripheral surface of the sealing material main body 10.

In the example of Fig. 5F, the shape of the sealing material main body 10 is similar to that of Fig. 5C, and the detection unit 20 is applied and formed at a position visible through the window member 51 on the holding table 13.

In the example of Fig. 5G, an inclined surface 14 that is inclined in a tapered shape in a direction away from the window member 51 toward the radially inside of the sealing material main body 10 is formed in a portion located on the inner peripheral side of the sealing material main body 10 and on the window member 51 side, and the detection unit 20 is applied and formed on the inclined surface.

### <Modification of Viewing Window 50>

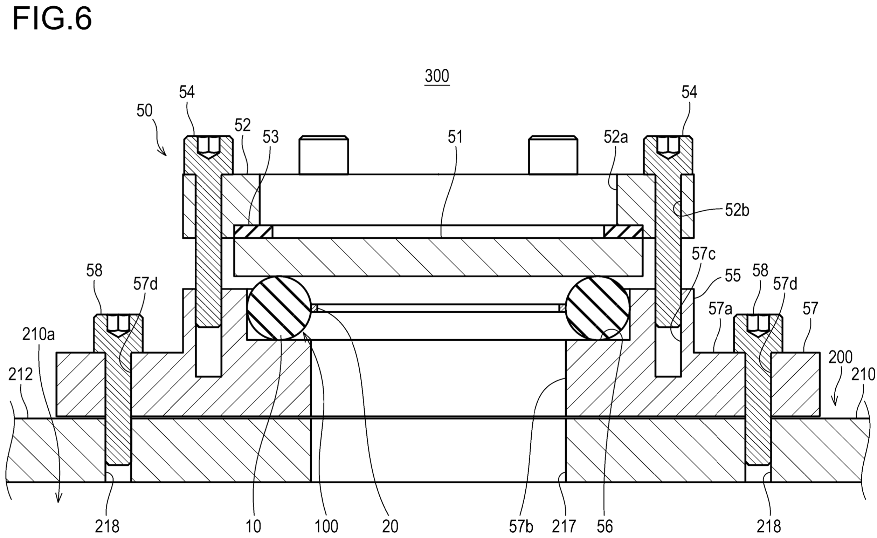

Next, a modification of the viewing window 50 will be described with reference to Fig. 6.

The viewing window 50 according to the present modification is different from the viewing window 50 according to the above embodiment in the following points, and is configured similarly to the viewing window 50 according to the above embodiment in the other points.

In the above embodiment, an example has been described in which the sealing material 100 is fixed to the viewing window 50 only after the viewing window 50 is attached to the housing 210. More specifically, in the above-described embodiment, an example has been described in which the sealing material 100, the window member 51, and the packing 53 are sandwiched between the holding frame 52 and (the seal arrangement portion 56 of) the top plate 212 only after the viewing window 50 is attached to the housing 210.

On the other hand, in the present modification, the viewing window 50 unitized in advance can be fixed to the housing 210 using the fixing member 58.

In the case of the present modification, the top plate 212 does not have the annular wall 55 and the seal arrangement portion 56, and the outer surface (at least a portion around the opening 217 to which the viewing window 50 is attached) of the top plate 212 is formed flat.

On the other hand, in the case of the present modification, the viewing window 50 further includes an attachment frame 57 described below.

The attachment frame 57 is a frame-shaped member disposed to face the holding frame 52, and includes, for example, a base 57a formed in an annular (ring-shaped) flat plate shape, an annular wall 55 formed on one surface of the attachment frame 57, and a seal arrangement portion 56 located inside annular wall 55.

The base 57a has an opening 57b at the center portion. An inner diameter of the opening 57b is set to be equal to the inner diameter of the opening 217, for example.

A plurality of fixing holes 57c (female threads) for fastening the holding frame 52 to the annular wall 55 using the fixing member 54 is formed in the base 57a from the annular wall 55 to a portion of the base 57a immediately below the annular wall 55.

In the base 57a, a plurality of fixing holes 57d for fastening the base 57a to the top plate 212 using the fixing member 58 is formed in a portion around the annular wall 55.

In a portion around the opening 217 in the top plate 212, a plurality of fixing holes 218 (female threads) for fastening the base 57a to the top plate 212 using the fixing members 58 is formed at positions corresponding to the fixing holes 57d.

In the case of the present modification, the viewing window 50 can be integrated (unitized) in advance before being attached to the housing 210 by fastening the holding frame 52 to the attachment frame 57 using the fixing member 54.

Thus, the viewing window 50 can be circulated in a state where an appropriate surface pressure is set.

In a state where the viewing window 50 is attached to the housing 210, the atmosphere inside the housing 210 can flow to the arrangement region of the detection unit 20 through the opening 217 and the opening 57b.

Although the embodiment and the modifications have been described above with reference to the drawings, these are examples of the present invention, and various configurations other than the above can be adopted.

For example, in the above description, an example has been described in which the number of detection units 20 included in the sealing material 100 is one, but the present invention is not limited to this example, and the sealing material 100 may include a plurality of detection units 20.

In this case, the plurality of detection units 20 can be the same as each other. That is, the detection target gases by the respective detection units 20 can be of the same type, and the detection sensitivities of the gases by the respective detection units 20 can be made equal to each other.

However, the present invention is not limited to this example, and the sealing material 100 may include a plurality of detection units 20 having different detection sensitivities. In addition, the sealing material 100 may include a plurality of detection units 20 in which types of the detection target gas are different from each other.

As a method for making the detection sensitivities of the plurality of detection units 20 different from each other, for example, it is possible to make the content ratio of the metal filler (silver filler or the like) in each detection unit 20 different. In this case, for example, the detection unit 20 having a higher content ratio of the metal filler has a higher gas detection sensitivity, and the detection unit 20 having a lower content ratio of the metal filler has a lower gas detection sensitivity.

In addition, as a method of making the types of detection target gas by the plurality of detection units 20 different from each other, for example, the types of metal fillers contained in the respective detection units 20 are made different from each other. For example, in a case where the detection target gas by one detection unit 20 is hydrogen sulfide and the detection target gas by the other detection unit 20 is water vapor, one detection unit 20 may contain a silver filler and the other detection unit 20 may contain cobalt chloride. The detection unit 20 containing cobalt chloride is initially blue (before contact with water vapor), and changes its color to red by reacting with water vapor.

The present embodiment includes the following technical ideas.
(1) A sealing material including:
   a sealing material main body that performs a sealing function between members; and
   a detection unit that changes color when coming into contact with a detection target gas.
(2) The sealing material according to (1), wherein the detection unit is integrated with the sealing material main body.
(3) The sealing material according to (2), wherein the detection unit is integrally molded with the sealing material main body.
(4) The sealing material according to (2) or (3), wherein the sealing material main body is a seal ring formed in an annular shape, and
   the detection unit is disposed at a position visible when the seal ring is viewed from one side in an axial direction of the seal ring.
(5) The sealing material according to (4), wherein at least a part of the detection unit is disposed on an inner peripheral side of the seal ring.
(6) The sealing material according to any one of (1) to (5), wherein the detection unit includes a polymer material, a coloring agent that changes color when coming into contact with hydrogen sulfide, and a color reaction accelerator.
(7) A viewing window attached to an opening penetrating an inside and an outside of a housing defining a closed space to make an inside of the closed space visible from the outside of the housing, the viewing window including:
   a window member having visible light transmittance; and
   a sealing material sealing between the window member and another member, wherein
   the sealing material is the sealing material according to any one of (1) to (6), and
   at least a portion of the detection unit is disposed at a position exposed to the closed space when the viewing window is attached to the opening, and is disposed at a position visible from the outside of the housing separated from the closed space by the window member through the window member.
(8) A battery unit including:
   a housing having an opening penetrating an inside and an outside and defining a closed space;
   a cell unit disposed in the housing; and
   a viewing window attached to the opening and making an inside of the closed space visible from an outside of the housing, wherein
   the viewing window includes
   a window member having visible light transmittance, and
   a sealing material sealing between the window member and another member,
   the sealing material is the sealing material according to any one of (1) to (6),
   the window member separates the closed space from the outside of the housing, and
   at least a portion of the detection unit is exposed to the closed space and is visible from the outside of the housing via the window member.

This application claims priority based on Japanese Patent Application No. 2023-100028 filed on June 19, 2023, the entire disclosure of which is incorporated herein.

### REFERENCE SIGNS LIST

- 100: Sealing material
- 10: Sealing material main body
- 11: Recess
- 12: Protrusion
- 13: Holding table
- 14: Inclined surface
- 20: Detection unit
- 50: Viewing window
- 51: Window member
- 52: Holding frame
- 52a: Opening
- 52b: Insertion hole
- 53: Packing
- 54: Fixing member
- 55: Annular wall
- 56: Seal arrangement portion
- 57: Attachment frame
- 57a: Base
- 57b: Opening
- 57c: Fixing hole
- 57d: Fixing hole
- 58: Fixing member
- 200: Battery
- 210: Housing
- 210a: Closed space
- 211: Bottom plate
- 212: Top plate
- 213: Side peripheral wall
- 217: Opening
- 218: Fixing hole
- 220: Cell unit
- 300: Battery unit

## Claims

1. A sealing material comprising:
a sealing material main body that performs a sealing function between members; and
a detection unit that changes color when coming into contact with a detection target gas.

2. The sealing material according to claim 1, wherein the detection unit is integrated with the sealing material main body.

3. The sealing material according to claim 2, wherein the detection unit is integrally molded with the sealing material main body.

4. The sealing material according to claim 2 or 3,
wherein the sealing material main body is a seal ring formed in an annular shape, and
the detection unit is disposed at a position visible when the seal ring is viewed from one side in an axial direction of the seal ring.

5. The sealing material according to claim 4, wherein at least a part of the detection unit is disposed on an inner peripheral side of the seal ring.

6. The sealing material according to any one of claims 1 to 5, wherein the detection unit includes a polymer material, a coloring agent that changes color when coming into contact with hydrogen sulfide, and a color reaction accelerator.

7. A viewing window attached to an opening penetrating an inside and an outside of a housing defining a closed space to make an inside of the closed space visible from the outside of the housing, the viewing window comprising:
a window member having visible light transmittance; and
a sealing material sealing between the window member and another member, wherein
the sealing material is the sealing material according to any one of claims 1 to 6, and
at least a portion of the detection unit is disposed at a position exposed to the closed space when the viewing window is attached to the opening, and is disposed at a position visible from the outside of the housing separated from the closed space by the window member through the window member.

8. A battery unit comprising:
a housing having an opening penetrating an inside and an outside and defining a closed space;
a cell unit disposed in the housing; and
a viewing window attached to the opening and making an inside of the closed space visible from an outside of the housing, wherein
the viewing window includes
a window member having visible light transmittance, and
a sealing material sealing between the window member and another member,
the sealing material is the sealing material according to any one of claims 1 to 6,
the window member separates the closed space from the outside of the housing, and
at least a portion of the detection unit is exposed to the closed space and is visible from the outside of the housing via the window member.
